# EUROPEAN PATENT SPECIFICATION

(11) **EP 4 575 292 B1**
(45) Date of publication and mention of the grant of the patent: **23.09.2026**
(21) Application number: 23220122.8
(22) Date of filing: 22.12.2023
(51) Int. Cl.: F16L 23/032

(54) **BACKING RING FLANGE**
STÜTZRINGFLANSCH
BRIDE DE BAGUE DE RENFORT

(43) Date of publication of application: 25.06.2025
(73) Proprietor: F.I.P. Formatura Iniezione Polimeri S.p.A, 16015 Casella (Genova) (IT)
(72) Inventor: CORSARO, Matteo, I-16015 CASELLA, GENOVA (IT); COSTA, Stefano, I-16015 CASELLA, GENOVA (IT); GIACHERO, Davide, I-16015 CASELLA, GENOVA (IT)
(74) Representative: Leihkauf, Steffen Falk

(56) References cited:
- DE-U1- 7 601 814
- US-A- 5 967 566

## Description

### Field of the invention

The present invention relates to a backing ring flange for joining two flanged ends of adjoining conduits, using through tightening screws, in particular to a connection flange having a central body made of metal coated with a layer of polymer material.

### Background art

In the technical field of flanged end joints of adjoining conduits, backing ring flanges are often used, which remain interposed between such flanged ends and clamped using tightening screws through the holes in the flanged ends and the backing ring flanges.

Generally, known backing ring flanges, often made of metal, are particularly heavy and not very easy to handle.

Such known flanges often have two opposite faces with mutually different shapes, due to particular construction requirements, e.g., following forming requirements.

Therefore, the need is felt to provide a backing ring flange which allows reducing the quantity of structural material used in the core body, the mechanical resistance of the flange itself being the same.

In other words, the need is felt to provide a backing ring flange having a core body having a geometry which allows optimizing the distribution of masses in the section, in order to perform high mechanical resistance, while reducing the quantity of material used.

### Summary of the invention

It is an object of the present invention to devise and provide a backing ring flange which allows meeting the aforesaid needs and at least partially obviating the drawbacks mentioned above with reference to the prior art.

It is another object of the present invention to provide a backing ring flange having a structural core body and a coating layer covering the core body, capable of reducing the quantity of material used in the core body, without affecting the mechanical resistance of the flange itself.

It is a further object of the present invention to provide a backing ring flange having a core body which allows optimizing the distribution of masses in the section of the core body, in order to perform high mechanical resistance, while reducing the quantity of material used in the core body.

The patent application US 5 967 566 A describes an improved convoluted flanges including one embodiment having a metal inset in a polymer casing in which the inset has a convoluted configuration similar to the outer convoluted configuration of the casing and another embodiment of a convoluted, slip-on, welding flange for welding to a pipe having a cross sectional, convoluted contour that is configured using stress analysis to shift the effective loading of connecting bolts from the centerline of the bolt holes in the flange to a locus closer to the pipe to which the flange is welded.

These and further objects and advantages are achieved by a backing ring flange according to independent claim 1.

Further objects, solutions, and advantages are present in the embodiments described below and claimed in the dependent claims.

### Brief description of the drawings

The invention will be shown below through the description of some embodiments thereof, given by way of non-limiting example, with reference to the accompanying drawings, in which:

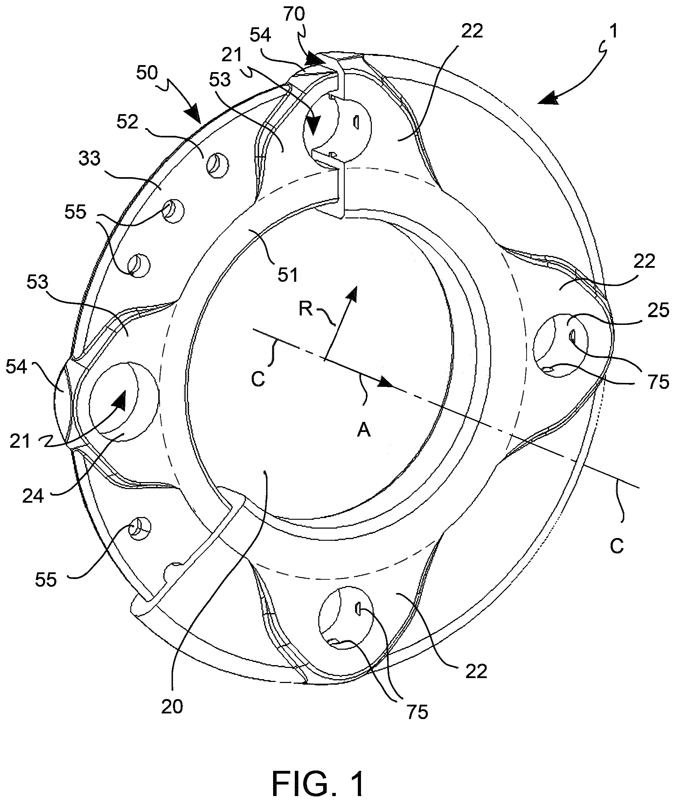

- figure 1 shows an isometric view of a backing ring flange according to the invention, in which a coating layer portion has been removed for illustrative purposes to show part of the core body;

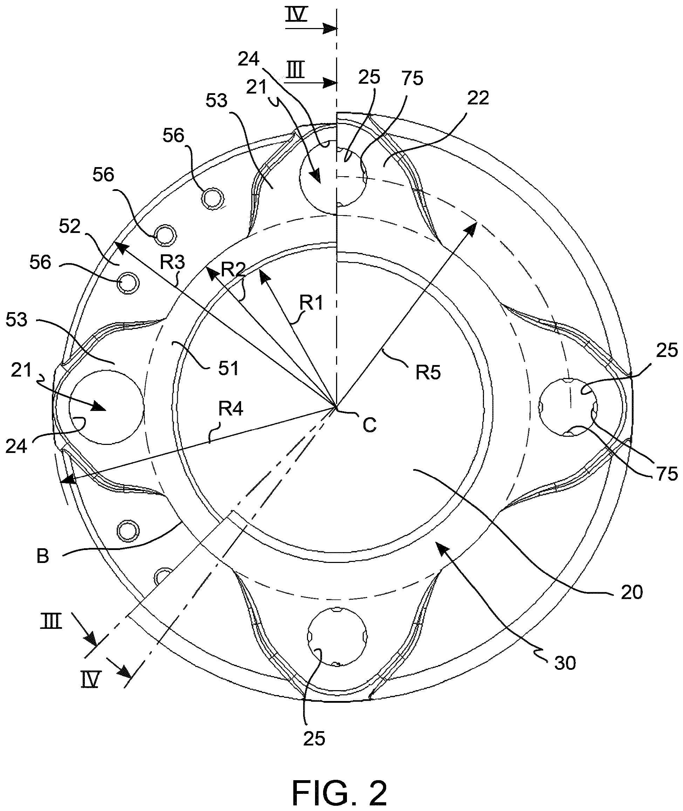

- figure 2 shows an axial view of the flange in figure 1;

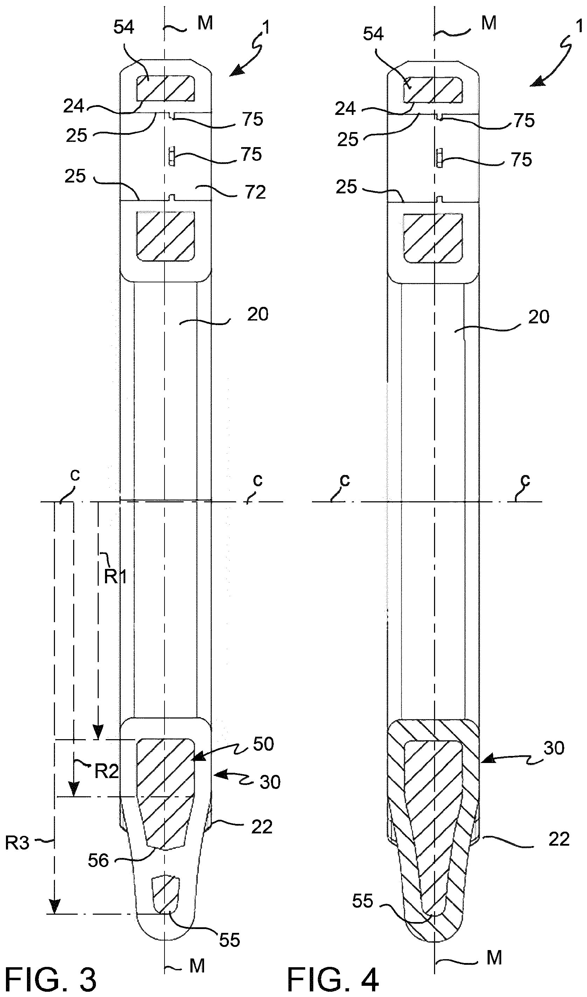

- figure 3 shows a cross-section view of the flange in figure 2 through the section planes III in figure 2;
- figure 4 shows a cross-section view of the flange in figure 2 through the section planes IV in figure 2;

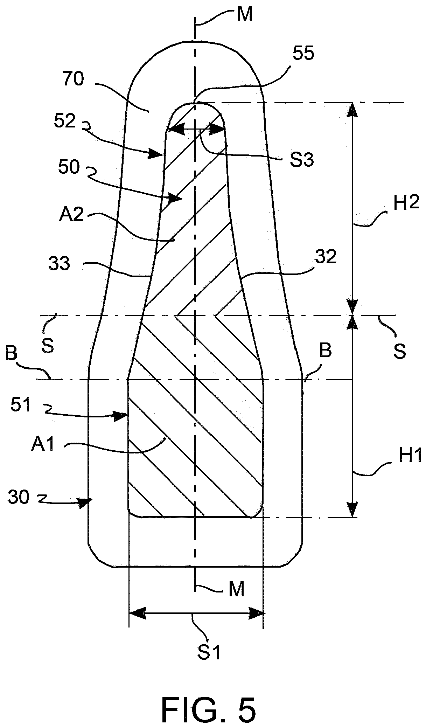

- figure 5 shows a cross-section view of the flange in figure 1 through a plane containing the central axis of the flange and not passing through a tightening hole, nor through a secondary hole, showing the two areas obtained from the division by means of the division line S-S.

### Description of preferred embodiments

With reference to the figures, a backing ring flange according to the invention for joining two flanged conduit ends to each other is indicated by reference numeral 1 as a whole.

The backing ring flange 1 has an annular shape defining a central flange axis C-C, an axial direction A along said central flange axis, a radial direction R orthogonal to said central axis C-C, a central flange opening 20 coaxial with said central axis C-C.

The backing ring flange 1 comprises an annular core body 50 arranged about said central flange axis C-C made of a first material, and a coating layer 70 made of a second material different from the first material entirely covering said core body 50.

According to an embodiment, the first material is a metal material.

According to an embodiment, the second material is a polymer material.

According to an embodiment, the annular core body 50 is coaxial with the central flange axis C-C.

According to an embodiment, the coating layer 70 is co-molded by the injection of polymer material onto the metal core body.

The core body made of metal material provides mechanical structural resistance, whereas the coating layer made of polymer material ensures protection against chemical agents.

According to an embodiment, the metal material is selected from cast iron and steel.

According to an embodiment, the polymer material is, or comprises, polypropylene, preferably loaded with fiberglass.

The core body 50 comprises a radially internal annular core body portion 51 extending radially from a first preset radius value R1 to a second preset radius value R2, and a radially external annular core body portion 52 adjoining said radially internal flange portion 51, extending from said second preset radius value R2 to a third preset end radius value R3.

The radially internal annular core body portion 51 is connected with continuity to the radially external annular core body portion 52 along a cylindrical surface B with a radius having said second preset radius value R2, said core body 50 having a preset axial core body connection thickness value S1 at said second preset radius value R2.

The core body defines a median plane M orthogonal to said central axis C-C and arranged half way through said preset axial core body connection thickness S1.

According to an embodiment, the radially internal annular core body portion 51 has a flat shape orthogonal to the central axis C-C, and has a constant thickness value equal to said preset axial core body connection thickness value S1.

The core body 50 comprises a plurality of tightening holes 21 angularly distributed about said central axis C-C and passing through according to parallel directions to the central axis C-C in said radially external annular core body portion 52, each tightening hole 21 of said plurality being arranged in a respective radial protrusion 53 of said radially internal annular core body portion 51 penetrating radially into said radially external core body portion 52.

According to an embodiment, the radially internal annular core body portion 51 has an equal axial thickness value to said preset axial core body connection thickness value S1. The radially external core body portion 52 has an axial thickness value S2 which decreases according to the radial direction from said preset axial radially internal core body connection thickness value S1, to an axial end thickness value S3 smaller than said preset radially internal core body thickness value S1.

Said radially external core body portion 52 is symmetrical with respect to said median plane M.

The flange 1 thus has the same features on both the opposite faces thereof. This allows mounting the flange without having to refer to one face or the other, making the mounting operations quicker and easier.

The cross-section of the core body 50, obtained through a section plane IV containing the central axis C-C and not passing through said radial protrusions 53, is ideally divisible, by means of a division line S-S parallel to the central axis C-C, into a first area A1 and a second area A2 of surface values equal to each other, where the first area A1 has a first height value H1 measured radially between said first radius R1 and said division line S-S, and the second area A2 has a second height value H2 measured between said division line S-S and said third preset radius value R3, where said second height value H2 is greater than the first height value H1 multiplied by 1.2.

The distribution of masses in the core body is thus optimized, while ensuring high mechanical resistance and weight reduction.

According to an embodiment, the coating layer 70 has a constant thickness.

According to an embodiment, each radial protrusion 53 extends radially to a fourth radius value R4 greater than said third preset end radius value R3.

Each protrusion 53 thus ensured the necessary mechanical resistance, precisely in an area in which the mechanical strain resulting from tightening is concentrated.

According to an embodiment, each radial protrusion 53 has a radially external end surface 54 belonging to a cylindrical surface coaxial with said central axis C-C, and having said fourth preset radius value R4.

According to an embodiment, said radially external annular core body portion 52 has a radially external end surface 55 connected according to a connection radius having a preset value.

According to an embodiment, said radially external annular core body portion 52 defines two side surfaces 32, 33 arranged on opposite sides with respect to said median plane M, having a concave shape.

Therefore, the core body only has material in the areas of the section in which greater mechanical strain is concentrated, thus avoiding the use of material in the areas not particularly subject to mechanical strain. This allows limiting the weight of the, while maintaining the same mechanical resistance of a flange having greater material and weight.

According to an embodiment, such concave side surfaces 32, 33 are curved surfaces.

Such a shape of the core body section allows further reducing the weight avoiding the mechanical resistance from being affected.

According to an embodiment, the radially external annular core body portion 52 comprises a plurality of secondary through holes 56 with parallel axes to said central axis C-C, angularly distributed about said central axis C-C, and said coating layer 70 completely fills the holes of said plurality of secondary through holes 56, completely hiding said plurality of secondary through holes 56 from the outside view of said flange 1.

The presence of the aforesaid secondary through holes 56 thus allows reducing the overall weight of the flange.

According to an embodiment, the secondary through holes 56 are equally angularly spaced between the two adjacent tightening holes of said plurality of tightening holes 21.

According to an embodiment, there are three secondary through holes between two adjacent tightening holes of said plurality of tightening holes 21.

According to an embodiment, each secondary through hole 56 has a hole side surface formed by two opposing frustoconical portions, having a diameter which increases away from said median plane M, preferably such a hole side surface has a minimum diameter at said median plane.

Advantageously, such a shape of the side surface of the secondary through holes 56 allows for an improved filling of such holes by the material of said coating layer 70, during the production of the flange 1.

According to an embodiment, there is an even number of tightening holes of said plurality of tightening holes 21 and they are arranged in diametrically opposite positions to one another, preferably there are four of such tightening holes 21.

Preferably, the tightening holes 21 of said plurality are equally angularly spaced apart from one another.

Preferably, the axes of the tightening holes 21 of said plurality are all on a circumference having the center on the central axis C-C, and having a preset circumference radius value R5.

According to an embodiment, said preset circumference radius value R5 is between said second preset radius value R2 and said third preset radius value R3.

According to an embodiment, each of said holes of said plurality of tightening holes 21 of said core body has a preferably cylindrical core body hole side wall 24 and said coating layer 70 comprises a hole coating portion 71 covering said core body hole side surface 24 defining an inner hole coating side surface 25.

According to an embodiment, said hole coating portion 71 has a plurality of projections 75 extending from said inner hole coating side surface 25 according to radial directions with respect to a respective axis of said tightening hole 21.

Advantageously, the projections 75 extending from the inside of the tightening hole and towards the axis thereof, allow retaining a tightening screw when partially inserted into the tightening hole, avoiding such a screw from slipping away during the flanged conduit joining operations, and thus to facilitate the installation operations.

According to an embodiment, said coating layer 71 comprises an identification mark visible close to each tightening hole 21 of said plurality, which allows distinguishing each said hole 21 from the other holes 21 of said plurality of tightening holes 21.

For example, such an identification mark is an identification number, for example each adjacent tightening hole 21 has an increasing number with respect to the previous tightening hole.

In this case, the increasing numbers indicate a tightening order of the various screws in the respective tightening holes so as to perform balanced tightening of the joint between two adjoining flanged conduits, with uniform distribution of pressures on the joint between two adjoining flanged conduits.

Those skilled in the art may make changes and adaptations to the embodiments of the device described above or can replace elements with others in order to meet contingent needs without departing from the scope of the following claims. Each of the features described above as belonging to a possible embodiment can be implemented irrespective of the other embodiments described.

### Reference numerals of the figures

1 backing ring flange
20 central flange opening
21 a plurality of core body tightening holes
32 side surface of the radially external core body
33 side surface of the radially external core body portion
50 core body
51 radially internal annular core body portion
52 radially external annular core body portion
53 radial protrusion
54 radially external end surface of the radial protrusion
55 radially external end surface of the radially external portion of the core body
70 coating layer
75 plurality of projections
A axial direction
A1 first area
A2 second area
B cylindrical surface
C-C central flange axis
H1 first height value
H2 second height value
M median plane
R radial direction
R1 first preset radius value
R2 second preset radius value
R3 third preset radius value
S-S division line
S1 preset axial core body connection thickness
S2 axial thickness value of the radially external portion
S3 axial end thickness value of radially external portion

## Claims

1. A backing ring flange (1) for joining together two flanged conduit ends, having an annular shape defining a central flange axis (C-C), an axial direction (A) along said central flange axis, a radial direction (R) orthogonal to said central axis (C-C), a central flange opening (20) coaxial to said central axis (C-C), said backing ring flange (1) comprising an annular core body (50) arranged about said central flange axis (C-C) made of a first material, and a coating layer (70) made of a second material different from the first material, entirely covering said core body (50);
wherein said core body (50) comprises:
- a radially internal annular core body portion (51) extending radially from a first preset radius value (R1) to a second preset radius value (R2), and a radially external annular core body portion (52) adjoining said radially internal flange portion (51), extending from said second preset radius value (R2) to a third preset end radius value (R3), said radially internal annular core body portion (51) being connected with continuity to the radially external annular core body portion (52) along a connection surface having a preset axial core body connection thickness value (S1), said radially internal annular core body portion (51) having a constant axial thickness value equal to said preset axial core body connection thickness value (S1) such that said radially internal annular core body portion (51) has a flat shape orthogonal to said central axis (C-C), said radially internal annular core body portion (51) defining a median plane (M) orthogonal to said central axis (C-C) and arranged half way through said radially internal annular core body portion axial thickness,
- a plurality of tightening holes (21) angularly distributed about said central axis (C-C) and passing through according to parallel directions to the central axis (C-C) in said radially external annular core body portion (52), each tightening hole (21) of said plurality being arranged in a respective radial protrusion (53) of said radially internal annular core body portion (51) penetrating radially into said radially external core body portion (52);
wherein:
- said radially external core body portion (52) has a decreasing axial thickness value (S2) according to the radial direction of said preset axial core body connection thickness value (S1), up to an axial end thickness value (S3) lower than said preset core body connection thickness value (S1);
- said radially external core body portion (52) and said radially internal annular core body portion (51) are symmetrical with respect to said median plane (M).

2. A backing ring flange (1) according to claim 1, wherein the cross-section of the core body (50), obtained through a section plane (IV) containing the central axis (C-C) and not passing through said radial protrusions (53), is ideally divisible, by means of a division line (S-S) parallel to the central axis (C-C), into a first area (A1) and a second area (A2) of surface values equal to each other, wherein the first area (A1) has a first height value (H1) measured radially between said first radius (R1) and said division line (S-S), and the second area (A2) has a second height value (H2) measured between said division line (S-S) and said third preset radius value (R3), wherein said second height value (H2) is greater than the first height value (H1) multiplied by 1.2.

3. A backing ring flange (1) according to claim 1, wherein said radially internal annular core body portion (51) is substantially flat and orthogonal to said central axis (C-C).

4. A backing ring flange (1) according to claim 1, wherein said connection surface is cylindrical.

5. A backing ring flange (1) according to claim 1, wherein said coating layer (70) has a constant thickness.

6. A backing ring flange (1) according to claim 1, wherein each radial protrusion (53) extends radially to a fourth radius value (R4) greater than said third preset end radius value (R3).

7. A backing ring flange (1) according to claim 6, wherein each radial protrusion (53) has a radially external end surface (54) belonging to a cylindrical surface coaxial with said central axis (C-C).

8. A backing ring flange (1) according to at least one preceding claim, wherein said radially external annular core body portion (52) has a radially external end surface (55) connected according to a connection radius having a preset value.

9. A backing ring flange (1) according to at least one preceding claim, wherein said radially external annular core body portion (52) defines two side surfaces (32, 33) arranged on opposite sides with respect to said median plane (M), having a concave shape.

10. A backing ring flange (1) according to claim 1, wherein said radially external annular core body portion (52) comprises a plurality of secondary through holes (56) with parallel axes to said central axis (C-C), angularly distributed about said central axis (C-C), and wherein said coating layer (70) completely fills the holes of said plurality of secondary through holes (56), completely hiding said plurality of secondary through holes (56) from the outside view of said flange (1).

11. A backing ring flange (1) according to at least one preceding claim, wherein each of said holes of said plurality of tightening holes (21) of said core body has a cylindrical core body hole side surface (24) and wherein said coating layer (70) comprises a hole coating portion (71) covering said core body hole side surface (24) defining an inner hole coating side surface (25).

12. A backing ring flange (1) according to claim 11, wherein said hole coating portion (71) has a plurality of projections (75) extending from said inner hole coating side surface (25) according to radial directions with respect to a respective axis of said tightening hole (21).

13. A backing ring flange (1) according to at least one preceding claim, wherein said coating layer (70) comprises an identification mark visible close to each tightening hole (21) of said plurality of tightening holes, which allows distinguishing each said hole (21) from the other holes (21) of said plurality of tightening holes (21).

14. A backing ring flange (1) according to at least one preceding claim, wherein said first material is a metal material, preferably selected from cast iron and steel.

15. A backing ring flange (1) according to at least one preceding claim, wherein said second material is a polymer material, wherein said polymer material is, or comprises, polypropylene, preferably loaded with fiberglass.

## Patentansprüche

1. Stützringflansch (1) zum Verbinden zweier geflanschter Leitungsenden, der eine ringförmige Form aufweist, die eine mittlere Flanschachse (C-C), eine axiale Richtung (A) entlang der genannten mittleren Flanschachse, eine radiale Richtung (R) senkrecht zu der genannten Mittelachse (C-C) und eine mittlere Flanschöffnung (20) koaxial zu der genannten Mittelachse (C-C) definiert, wobei der genannte Stützringflansch (1) einen um die genannte mittlere Flanschachse (C-C) angeordneten ringförmigen Kernkörper (50) aus einem ersten Werkstoff und eine Beschichtungsschicht (70) aus einem zweiten, vom ersten Werkstoff verschiedenen Werkstoff umfasst, die den genannten Kernkörper (50) vollständig bedeckt;
wobei der genannte Kernkörper (50) Folgendes umfasst:
- einen radial innenliegenden ringförmigen Kernkörperabschnitt (51), der radial von einem ersten voreingestellten Radiuswert (R1) zu einem zweiten voreingestellten Radiuswert (R2) verläuft, und einen radial außenliegenden ringförmigen Kernkörperabschnitt (52), der an den genannten radial innenliegenden Flanschabschnitt (51) angrenzt und von dem genannten zweiten voreingestellten Radiuswert (R2) zu einem dritten voreingestellten Endradiuswert (R3) verläuft, wobei der genannte radial innenliegende ringförmige Kernkörperabschnitt (51) entlang einer Verbindungsfläche mit einem voreingestellten axialen Dickenwert der Kernkörperverbindung (S1) durchgehend mit dem radial außenliegenden ringförmigen Kernkörperabschnitt (52) verbunden ist, wobei der genannte radial innenliegende ringförmige Kernkörperabschnitt (51) einen konstanten axialen Dickenwert aufweist, der dem genannten voreingestellten axialen Dickenwert der Kernkörperverbindung (S1) entspricht, so dass der genannte radial innenliegende ringförmige Kernkörperabschnitt (51) eine flache Form senkrecht zu der genannten Mittelachse (C-C) aufweist, wobei der genannte radial innenliegende ringförmige Kernkörperabschnitt (51) eine Medianebene (M) definiert, die senkrecht zu der genannten Mittelachse (C-C) verläuft und auf der Hälfte der genannten axialen Dicke des genannten radial innenliegenden ringförmigen Kernkörperabschnitts angeordnet ist,
- eine Vielzahl von Anzugslöchern (21), die winklig um die genannte Mittelachse (C-C) verteilt sind und in parallelen Richtungen zu der Mittelachse (C-C) durch den genannten radial außenliegenden ringförmigen Kernkörperabschnitt (52) verlaufen, wobei jedes Anzugsloch (21) der genannten Vielzahl in einem entsprechenden radialen Vorsprung (53) des genannten radial innenliegenden ringförmigen Kernkörperabschnitts (51) angeordnet ist und radial in den genannten radial außenliegenden Kernkörperabschnitt (52) hineinragt;
wobei:
- der genannte radial außenliegende Kernkörperabschnitt (52) eine abnehmende axiale Dicke (S2) entsprechend der radialen Richtung des genannten voreingestellten axialen Stärkenwerts der Kernkörperverbindung (S1) bis zu einem axialen Endstärkenwert (S3) aufweist, der kleiner ist als der genannte voreingestellte Dickenwert der Kernkörperverbindung (S1);
- der genannte radial außenliegende Kernkörperabschnitt (52) und der genannte radial innenliegende ringförmige Kernkörperabschnitt (51) im Verhältnis zu der genannten Medianebene (M) symmetrisch sind.

2. Stützringflansch (1) nach Anspruch 1, wobei der Querschnitt des Kernkörpers (50), der sich durch eine die Mittelachse (C-C) enthaltende und nicht durch die genannten radialen Vorsprünge (53) verlaufende Schnittebene (IV) ergibt, idealerweise mittels einer parallel zur Mittelachse (C-C) verlaufenden Teilungslinie (S-S) in eine erste Fläche (A1) und eine zweite Fläche (A2) mit jeweils gleichen Oberflächenwerten teilbar ist, wobei die erste Fläche (A1) einen ersten Höhenwert (H1) aufweist, der radial zwischen dem genannten ersten Radius (R1) und der genannten Teilungslinie (S-S) gemessen wird, und die genannte zweite Fläche (A2) einen zweiten Höhenwert (H2) aufweist, der zwischen der genannten Teilungslinie (S-S) und dem genannten dritten voreingestellten Radiuswert (R3) gemessen wird, wobei der genannte zweite Höhenwert (H2) größer ist als der erste Höhenwert (H1) multipliziert mit 1,2.

3. Stützringflansch (1) nach Anspruch 1, wobei der genannte radial innenliegende ringförmige Kernkörperabschnitt (51) im Wesentlichen flach und senkrecht zu der genannten Mittelachse (C-C) ist.

4. Stützringflansch (1) nach Anspruch 1, wobei die genannte Verbindungsfläche zylindrisch ist.

5. Stützringflansch (1) nach Anspruch 1, wobei die genannte Beschichtungsschicht (70) eine konstante Dicke aufweist.

6. Stützringflansch (1) nach Anspruch 1, wobei jeder radiale Vorsprung (53) radial zu einem vierten Radiuswert (R4) verläuft, der größer ist als der genannte dritte voreingestellte Endradiuswert (R3) ist.

7. Stützringflansch (1) nach Anspruch 6, wobei jeder radiale Vorsprung (53) eine radial außenliegende Endfläche (54) aufweist, die zu einer zu der genannten Mittelachse (C-C) koaxialen Zylinderfläche gehört.

8. Stützringflansch (1) nach mindestens einem vorangegangenen Anspruch, wobei der genannte radial außenliegende ringförmige Kernkörperabschnitt (52) eine radial außenliegende Endfläche (55) aufweist, die gemäß einem Verbindungsradius mit einem voreingestellten Wert verbunden ist.

9. Stützringflansch (1) nach mindestens einem vorangegangenen Anspruch, wobei der genannte radial außenliegende ringförmige Kernkörperabschnitt (52) zwei Seitenflächen (32, 33) definiert, die im Verhältnis zu der genannten Medianebene (M) auf gegenüberliegenden Seiten angeordnet sind und eine konkave Form aufweisen.

10. Stützringflansch (1) nach Anspruch 1, wobei der genannte radial außenliegende ringförmige Kernkörperabschnitt (52) eine Vielzahl von sekundären Durchgangslöchern (56) mit zu der genannten Mittelachse (C-C) parallelen Achsen aufweist, die winklig um die genannte Mittelachse (C-C) verteilt sind, und wobei die genannte Beschichtungsschicht (70) die Löcher der genannten Vielzahl von sekundären Durchgangslöchern (56) vollständig ausfüllt und so die genannte Vielzahl von sekundären Durchgangslöchern (56), von der Außenseite des genannten Flansches (1) gesehen, vollständig verdeckt.

11. Stützringflansch (1) nach mindestens einem vorangegangenen Anspruch, wobei jedes der genannten Löcher der genannten Vielzahl von Anzugslöchern (21) des genannten Kernkörpers eine zylindrische Seitenfläche des Kernkörperlochs (24) aufweist und wobei die genannte Beschichtungsschicht (70) einen Lochbeschichtungsabschnitt (71) umfasst, der die genannte Seitenfläche des Kernkörperlochs (24) bedeckt und so eine Seitenfläche der inneren Lochbeschichtung (25) definiert.

12. Stützringflansch (1) nach Anspruch 11, wobei der genannte Lochbeschichtungsabschnitt (71) eine Vielzahl von Vorsprüngen (75) aufweist, die von der genannten Seitenfläche der inneren Lochbeschichtung (25) im Verhältnis zu einer entsprechenden Achse des genannten Anzugslochs (21) in radialen Richtungen verlaufen.

13. Stützringflansch (1) nach mindestens einem vorangegangenen Anspruch, wobei die genannte Beschichtungsschicht (70) eine in der Nähe jedes Anzugslochs (21) der genannten Vielzahl von Anzugslöchern sichtbare Kennzeichnung umfasst, die es gestattet, jedes genannte Loch (21) von den anderen Löchern (21) der genannten Vielzahl von Anzugslöchern (21) zu unterscheiden.

14. Stützringflansch (1) nach mindestens einem vorangegangenen Anspruch, wobei der genannte erste Werkstoff ein vorzugsweise unter Gusseisen und Stahl gewählter Metallwerkstoff ist.

15. Stützringflansch (1) nach mindestens einem vorangegangenen Anspruch, wobei der genannte zweite Werkstoff ein Polymerwerkstoff ist, wobei der genannte Polymerwerkstoff ein vorzugsweise mit Glasfaser verstärktes Polypropylen ist oder dieses umfasst.

## Revendications

1. Bride de bague d'appui (1) pour assembler deux extrémités de conduit à bride, ayant une forme annulaire définissant un axe central de bride (C-C), une direction axiale (A) le long dudit axe central de bride, une direction radiale (R) orthogonale audit axe central (C-C), une ouverture centrale de bride (20) coaxiale audit axe central (C-C), ladite bride de bague d'appui (1) comprenant un corps d'âme annulaire (50) disposé autour dudit axe central de bride (C-C) constituée d'un premier matériau, et une couche de revêtement (70) constituée d'un deuxième matériau différent du premier matériau, recouvrant entièrement ledit corps d'âme (50) ;
dans laquelle ledit corps d'âme (50) comprend :
- une partie de corps d'âme annulaire radialement interne (51) s'étendant radialement depuis une première valeur de rayon prédéfinie (R1) jusqu'à une deuxième valeur de rayon prédéfinie (R2), et une partie de corps d'âme annulaire radialement externe (52) adjacente à ladite partie de bride radialement interne (51), s'étendant depuis ladite deuxième valeur de rayon prédéfinie (R2) jusqu'à une troisième valeur de rayon d'extrémité prédéfinie (R3), ladite partie de corps d'âme annulaire radialement interne (51) étant connectée de manière continue à la partie de corps d'âme annulaire radialement externe (52) le long d'une surface de connexion ayant une valeur d'épaisseur de connexion d'âme axiale prédéfinie (S1), ladite partie de corps d'âme annulaire radialement interne (51) ayant une valeur d'épaisseur axiale constante égale à ladite valeur d'épaisseur de connexion d'âme axiale prédéfinie (S1) de sorte que ladite partie de corps d'âme annulaire radialement interne (51) a une forme plate orthogonale audit axe central (C-C), ladite partie de corps d'âme annulaire radialement interne (51) définissant un plan médian (M) orthogonal audit axe central (C-C) et disposé à mi-chemin de ladite épaisseur axiale de partie de corps d'âme annulaire radialement interne,
- une pluralité de trous de serrage (21) répartis angulairement autour dudit axe central (C-C) et traversant selon des directions parallèles à l'axe central (C-C) dans ladite partie de corps d'âme annulaire radialement externe (52), chaque trou de serrage (21) de ladite pluralité étant disposé dans une saillie radiale respective (53) de ladite partie de corps d'âme annulaire radialement interne (51) pénétrant radialement dans ladite partie de corps d'âme radialement externe (52) ;
dans laquelle :
- ladite partie de corps d'âme radialement externe (52) a une valeur d'épaisseur axiale décroissante (S2) selon la direction radiale de ladite valeur d'épaisseur de connexion d'âme axiale prédéfinie (S1), jusqu'à une valeur d'épaisseur d'extrémité axiale (S3) inférieure à ladite valeur d'épaisseur de connexion de corps d'âme prédéfinie (S1) ;
- ladite partie de corps d'âme radialement externe (52) et ladite partie de corps d'âme annulaire radialement interne (51) sont symétriques par rapport audit plan médian (M).

2. Bride de bague d'appui (1) selon la revendication 1, dans laquelle la section transversale du corps d'âme (50), obtenue à travers un plan de section (IV) contenant l'axe central (C-C) et ne passant pas par lesdites saillies radiales (53), est idéalement divisible, au moyen d'une ligne de division (S-S) parallèle à l'axe central (C-C), en une première zone (Al) et une deuxième zone (A2) de valeurs de surface égales entre elles, dans laquelle la première zone (A1) a une première valeur de hauteur (H1) mesurée radialement entre ledit premier rayon (R1) et ladite ligne de division (S-S), et la deuxième zone (A2) a une deuxième valeur de hauteur (H2) mesurée entre ladite ligne de division (S-S) et ladite troisième valeur de rayon prédéfinie (R3), dans laquelle ladite deuxième valeur de hauteur (H2) est supérieure à la première valeur de hauteur (H1) multipliée par 1,2.

3. Bride de bague d'appui (1) selon la revendication 1, dans laquelle ladite partie de corps d'âme annulaire radialement interne (51) est sensiblement plate et orthogonale audit axe central (C-C).

4. Bride de bague d'appui (1) selon la revendication 1, dans laquelle ladite surface de connexion est cylindrique.

5. Bride de bague d'appui (1) selon la revendication 1, dans laquelle ladite couche de revêtement (70) a une épaisseur constante.

6. Bride de bague d'appui (1) selon la revendication 1, dans laquelle chaque saillie radiale (53) s'étend radialement jusqu'à une quatrième valeur de rayon (R4) supérieure à ladite troisième valeur de rayon d'extrémité prédéfinie (R3).

7. Bride de bague d'appui (1) selon la revendication 6, dans laquelle chaque saillie radiale (53) a une surface d'extrémité radialement externe (54) appartenant à une surface cylindrique coaxiale audit axe central (C-C).

8. Bride de bague d'appui (1) selon au moins une revendication précédente, dans laquelle ladite partie de corps d'âme annulaire radialement externe (52) a une surface d'extrémité radialement externe (55) connectée selon un rayon de connexion ayant une valeur prédéfinie.

9. Bride de bague d'appui (1) selon au moins une revendication précédente, dans laquelle ladite partie de corps d'âme annulaire radialement externe (52) définit deux surfaces latérales (32, 33) disposées sur des côtés opposés par rapport audit plan médian (M), ayant une forme concave.

10. Bride de bague d'appui (1) selon la revendication 1, dans laquelle ladite partie de corps d'âme annulaire radialement externe (52) comprend une pluralité de trous traversants secondaires (56) avec des axes parallèles audit axe central (C-C), répartis angulairement autour dudit axe central (C-C), et dans laquelle ladite couche de revêtement (70) remplit complètement les trous de ladite pluralité de trous traversants secondaires (56), cachant complètement ladite pluralité de trous traversants secondaires (56) de la vue extérieure de ladite bride (1).

11. Bride de bague d'appui (1) selon au moins une revendication précédente, dans laquelle chacun desdits trous de ladite pluralité de trous de serrage (21) dudit corps d'âme a une surface latérale de trou de corps d'âme cylindrique (24) et dans laquelle ladite couche de revêtement (70) comprend une partie de revêtement de trou (71) recouvrant ladite surface latérale de trou de corps d'âme (24) définissant une surface latérale de revêtement de trou interne (25).

12. Bride de bague d'appui (1) selon la revendication 11, dans laquelle ladite partie de revêtement de trou (71) comporte une pluralité de saillies (75) s'étendant depuis ladite surface latérale de revêtement de trou interne (25) selon des directions radiales par rapport à un axe respectif dudit trou de serrage (21).

13. Bride de bague d'appui (1) selon au moins une revendication précédente, dans laquelle ladite couche de revêtement (70) comprend une marque d'identification visible à proximité de chaque trou de serrage (21) de ladite pluralité de trous de serrage, ce qui permet de distinguer chaque dit trou (21) des autres trous (21) de ladite pluralité de trous de serrage (21).

14. Bride de bague d'appui (1) selon au moins une revendication précédente, dans laquelle ledit premier matériau est un matériau métallique, de préférence choisi parmi la fonte et l'acier.

15. Bride de bague d'appui (1) selon au moins une revendication précédente, dans laquelle ledit deuxième matériau est un matériau polymère, dans laquelle ledit matériau polymère est, ou comprend, du polypropylène, de préférence chargé avec de la fibre de verre.
